# EUROPEAN PATENT APPLICATION

(11) **EP 1 178 445 A1**
(43) Date of publication of application: **06.02.2002**
(21) Application number: 00440221.0
(22) Date of filing: 31.07.2000
(51) Int. Cl.: G07F 7/10

(54) **Method for performing short-range wireless transactions between an hybrid wireless terminal and a service terminal**

(71) Applicant: ALCATEL, 75008 Paris (FR)
(72) Inventor: Kumar, Vinod, 75005 Paris (FR); Hue, Cyril, 93190 Ivry-Gargan (FR)
(74) Representative: Rausch, Gabriele, Dr.

(57) **Abstract**

The invention relates to a method for performing a short-range wireless transaction between an hybrid wireless terminal and a service terminal. The hybrid terminal is able to communicate over a first interface with a radio communication network and over a second interface for short-range wireless access with a service terminal, the hybrid wireless terminal comprises a user authentication information for authenticating a user in the radio communication network.

According to the invention, the method consists of:
- transmitting over the second interface for short-range wireless a message to the service terminal comprising at least the user authentication information;
- authenticating the user at the service terminal by checking the received user authentication information against an authentication database;
- enabling the transaction if the user authentication has been successful.

## Description

The present invention relates to wireless short-range data communication systems and more particularly to a method for performing short-range wireless transactions between an hybrid wireless terminal and a service terminal.

An hybrid wireless terminal should be understood as a wireless terminal dedicated to access to a radio communication network, as for example a GSM mobile phone or third generation UMTS mobile phone, further comprising an interface for short-range wireless access, for example a Bluetooth interface. An example of such an hybrid wireless terminal is already known from Bluetooth Specification Version 1.0 B page 100 from 1 December 1999 and describes the "3-in-1 phone" model with built-in Bluetooth technology.

At home, the "3-in 1 phone" functions as a cordless telephone. On the move, it functions as a cellular telephone. For these two first applications, the mobile telephone uses the usual interface to a radio communication network at home the 3-in-1 phone communicates for example over DECT to a local base station, on the moves, the 3-in-1 phone communicates over GSM.

In a third configuration, when the 3-in-1 phone comes within the range of another mobile phone with built-in Bluetooth technology, it functions as a walkie-talkie and communicates exclusively with the other mobile phone over the Bluetooth interface. In that case the communication does not require resources from a radio communication network. Moreover, the communication is not billed.

Bluetooth is a computing and telecommunications industry specification that describes how mobile phones, computers, personal digital assistants and other stand-alone devices can easily interconnect with each other using a short-range wireless connection. The technology requires that a low-cost transceiver chip be included in each device. Each device is equipped with a microchip transceiver that transmits and receives in a frequency band of 2.45 GHz that is available globally (with some variation of bandwidth in different countries). The maximum range between two Bluetooth equipped devices for setting up a connection is 10 meters. Data as well as voice communications can be set up over the Bluetooth interface. Data can be exchanged at a rate of 1 megabits per second (up to 2 Mbps in the second generation of the technology). A frequency hop scheme allows devices to communicate even in areas with a great deal of electromagnetic interference. Each device is identified by a unique 48-bit address defined in the Bluetooth standard. Built-in encryption and verification of this unique address is provided for ensuring the connection security. However, the verification described in the Bluetooth standard is uniquely based on a device identification. This identification prevents a Bluetooh device not registered at another Bluetooth device to communicate with it. A drawback of this device-based identification is that no user authentication is possible and as a consequence a lot of applications requiring a user authentication are not possible over the short-range wireless Bluetooth interface.

The term service terminal is used to cover terminals that are able to provide a service to a user that starts a transaction with this service terminal over a short range wireless interface. During a transaction, a user requests a service to be provided by the service terminal, the transaction comprises a dialog between the user and the service terminal for checking the modalities in which the service has to be provided as well as an authentication of the user. If the authentication has been successful, the service terminal provides the service to the user and ends the transaction.

Since the services provided by the service terminal are preferably billed to the user, the authentication of the user is required for authorizing the service terminal provider to be credited the amount of money required for the service. Possible examples of service terminals entering this category are: a toll gate that opens automatically and deducts the toll gate price from the bank account of drivers equipped with an hybrid mobile phone with Bluetooth interface, a drink automate that is controlled by an hybrid mobile phone from a user wanting to buy a drink, the cost of this drink being deducted from his bank account or added to his phone bill.

On the other hand, the services provided by a service terminal may be confidential. In that case, an authentication of the user is also required to preserve confidentiality. Example of service terminals entering this category are printers of bank account extracts controlled with an hybrid mobile phone or printers of medical reports controlled over an hybrid mobile phone.

A particular object of the present invention is to provide a method enlarging the spectrum of applications supported by an hybrid mobile phone in providing a method for user authentication over the short-range wireless interface.

Another object of the invention is to take advantage of the capabilities of an hybrid terminal to reduce the load produced by certain applications on the radio communication network.

These objects, and others that appear below, are achieved by a method for performing a short-range wireless transaction between an hybrid wireless terminal and a service terminal, the hybrid terminal being able to communicate over a first interface with radio communication network and over a second interface for short-range wireless access with a service terminal, the hybrid wireless terminal comprising a user authentication information for authenticating a user in the radio communication network. The method consists in performing the steps of:
- transmitting over the second interface for short-range wireless access a message to the service terminal comprising at least the user authentication information;
- authenticating the user at the service terminal by checking the received user authentication information against an authentication database;
- enabling the transaction if the user authentication has been successful.

This method has the advantage that a transaction between the hybrid wireless terminal and the service terminal is independent on the radio communication network coverage. Indeed, even if the user is located in an area where no radio communication network coverage is provided, he can make a transaction with the service terminal.

Another advantage of this method is that a transaction with the service terminal and a communication over the radio communication network can be performed simultaneously since the transaction with the service terminal does not require any radio communication network resources.

The present invention also concerns a service terminal according to claim 6 and an hybrid wireless terminal according to claim 8.

Other characteristics and advantages of the invention will appear on reading the following description of a preferred implementation given by way of non-limiting illustrations, and from the accompanying drawings, in which:
- Figure 1 shows a system where a method according to the invention can be implemented;
- Figure 2 shows a flow diagram of an embodiment of the method according to the present invention;
- Figure 3 shows an embodiment of a wireless terminal according to the present invention;
- Figure 4 shows an embodiment of a service terminal according to the present invention.

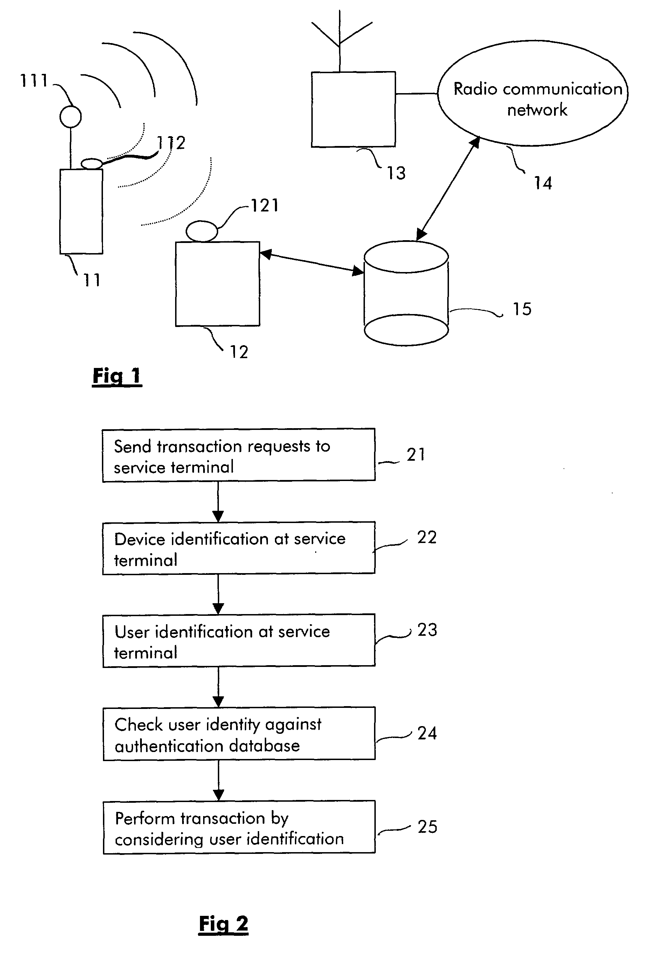

Figure 1 shows a system where a method according to the invention can be implemented. The system comprises an hybrid wireless terminal 11, a base station 13 belonging to a radio communication network 14, a service terminal 12 and an authentication database 15.

Hybrid wireless terminal 11 comprises an antenna 111 for communicating over the air interface with base station 13 of the radio communication network 14 and a short-range wireless interface 112 for communicating over the air interface with service terminal 12.

Radio communication network 14 is preferably a GSM network or an UMTS network. However, any other radio communication network providing features ensuring communication security like authentication and authorization could also be examples for radio communication network 17.

The short-range wireless interface used for communicating between hybrid wireless terminal 11 and service terminal 12 is preferably based on the Bluetooth standard. However, any other standardized short-range wireless interface may also be envisaged. Another example could be the Home RF standard. Both Bluetooth and Home RF are based on radio frequency communication. Also optical communication using infrared may be used over the short-range wireless interface. Standards defined by the Infrared Data Association (IrDa) describes such an Infrared communication.

An advantage of radio frequency communication over the short-range wireless interface is that the antenna may be used for communication with radio communication network 14 as well as with service terminal 14. By using infrared communication on short-range wireless interface an infrared emitter should be incorporated to the hybrid terminal.

A condition for a communication to be established over the short-range wireless interface is that the distance between the hybrid wireless terminal and the service terminal is compatible with the distance indicated in the standard (i.e. up to 10 meters for Bluetooth) for the radio wave to be received properly.

Such a distance condition is usually not set for communicating with radio communication network 14 since it is the purpose of a radio communication network provider to design his network so that a whole area coverage is ensured. This is achieved by an appropriate positioning of the bases stations and the provision of hand-over procedure. The goal of short-range wireless communication, on the contrary, is to enable a communication between two devices either close to each other or even in front of each other without any obstacles in between.

According to the invention hybrid wireless terminal 11 transmits over short-range wireless interface 112 a user authentication information used at service terminal 12 to perform user authentication. This user authentication information is located in an identification module at wireless terminal 11 already dedicated to be used for authenticating the user of wireless terminal 11 in radio communication network 14. This identification module is preferably the SIM (Subscriber Identification Module) card and comprises user authentication information. Example of such user authentication information may be the IMSI or TMSI (International resp. Temporary Mobile Subscriber Identification). Other possible user authentication information enabling it to univocally identify the user may also be saved on the SIM card for example a bank account number or a PIN number.

For providing such short-range communications with security somewhat comparable to the security provided in radio communication network 14, service terminal 12 is connected to a database 15 containing user authentication information of users authorized to make transactions with service terminal 12.

This database may be physically connected to service terminal 12. Database 15 may also be part of service terminal 12 itself. In such a case, each service terminal is connected to a replicated version of database 15.

Alternatively, this database 15 may be a central element to which service terminal 12 is connected over an appropriate network. In this configuration, several service terminals may be simultaneously connected to database 15. In this case, the database contents have not to be replicated and as a consequence are less subject to data inconsistencies.

In a preferred embodiment, database 15 is the same database as the one used by the radio communication network 14 for performing authentication in the radio communication network 14. In this embodiment, database 15 may correspond to the Home Location Register (HLR) of the radio communication network 14. The service terminal 12 is allowed by the radio communication network operator to have access to the HLR over a specific secured connection. In case service terminal 12 is part of a network of a plurality of service terminals, a central entity in the network of service terminal may be responsible for forwarding the authentication requests from the different service terminals to the HLR preferably over a permanent connection between this central entity and the HLR.

Figure 2 shows a flow diagram of an embodiment of the method according to the present invention comprising steps 21 to 25.

Step 21 consists in sending a transaction request from the hybrid wireless terminal to a service terminal. At this stage, the usual Bluetooth standardized connection procedure can be used.

Step 22, also part of this standardized connection procedure, consists in performing the identification of the hybrid wireless terminal at the service station. This identification makes use of the unique 48-bit address identifying each Bluetooth capable device.

Step 23, according to the invention and additionally to the device identification performed at step 22, consists in performing user authentication. At this stage, a user authentication information stored in a identification module at the hybrid wireless terminal is transmitted in a specific message to the service terminal over the Bluetooth interface. This user authentication information is preferably also used for authenticating the user in the radio communication network, the hybrid wireless terminal is able to communicate with.

Step 24 consists, upon reception of this specific message at the service terminal, in extracting the user authentication information and performing a check against a database containing user authentication information of all users authorized to perform a secured transaction with the service terminal.

If the authentication is successful, that is to say the user is one of the users authorized to perform secured transactions with the service terminal, the service terminal sends an acknowledgement to the hybrid wireless terminal acknowledging his transaction request.

Step 25 consists in performing the transaction itself.

If the authentication at step 24 has not been successful, the transaction request is rejected. As additional security mechanism, the parameters of this unsuccessful transactions may be stored in a log file used for detecting suspicious transactions attempts.

In a preferred embodiment, the message containing the user authentication information may be protected by encryption for preventing possible interception attempts. This is all the more important as interception of an unprotected user authentication information could enable an ill-intentioned interceptor to perform money transactions on the behalf of the user. Any usual encryption mechanisms as known by those skilled in the art may be envisaged. It is possible to use the same encryption mechanism as the one used in the radio communication network, the hybrid wireless terminal is able to communicate with.

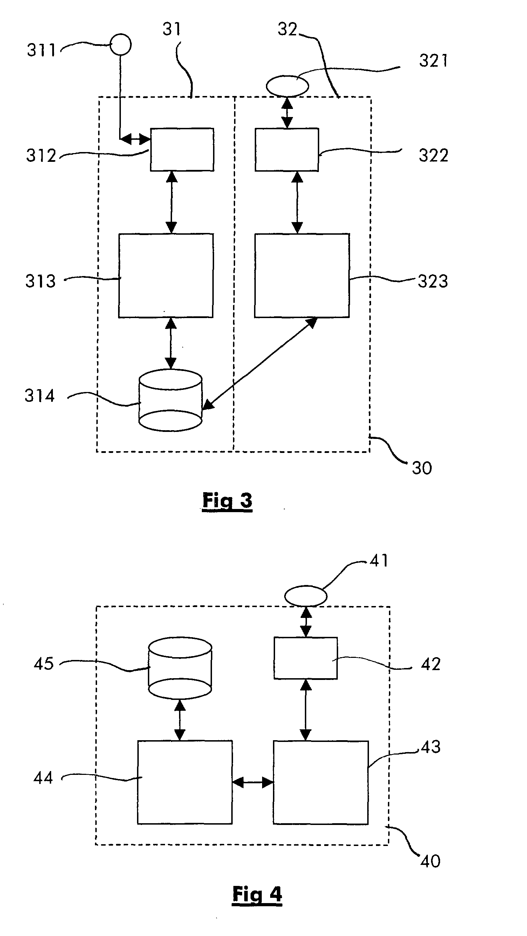

Figure 3 shows an embodiment of an hybrid wireless terminal according to the present invention. Hybrid wireless terminal 30 comprises two parts 31 and 32. First part 31 is dedicated to support communication with a usual radio communication network as GSM or UMTS for example.

First part 31 comprises an antenna 311, interface to the radio communication network, a first sender/receiver module 312, a first communication controller 313, and a subscriber identification module 314.

Second part 32 comprises a short-range wireless interface 321 for communicating over the air interface with a service terminal, a second sender/receiver module 322 and a second communication controller 323. The standard used over this interface is preferably Bluetooth.

In prior art solutions, the two parts 31 and 32 of this kind of hybrid terminal are independent form each other. On the contrary, according to the present invention, the subscriber identification module 314 is shared by first part 31 and second part 32 so that the second communication controller 322 can access to the subscriber identification module 314 for extracting a user authentication information form this module and transmitting it in an appropriate message over sender/receiver module 322 and interface 321 on the short-range wireless interface.

In another embodiment of hybrid wireless terminal 30, the two sender/receivers 312 and 322 or the two communication controllers 313 and 323 may be located on the same physical entity, the communication process controlling the two parts being distinct. In that case the process controlling the communication of second part 32 has access to subscriber identification module 314 what would still be in the scope of this invention.

Figure 4 shows an embodiment of a service terminal according to the present invention. Service terminal 40 comprises a short-range wireless interface 41, a sender/receiver module 42, a communication controller 43, an authentication module 44 and an authentication database 45.

When receiving an message over interface 41, and sender/receiver 42, this message is forwarded to communication controller 43, said communication controller detects if this message is an authentication message comprising a user authentication information. If it is the case, this message is forwarded to authentication module 44 which makes a request to an authentication database 45 to check the user authentication information against the database contents.

As already mentioned above, the authentication database may be external to the service terminal. In such a case, authentication module 44 sends a authentication request to this external database over a dedicated interface.

As also mentioned above, the user authentication information may be encrypted. It is also the task of the authentication module to decrypt the user authentication information before checking it against the database contents. If the authentication has been successful, the authentication module 44 triggers the communication controller to send a transaction acknowledgement over the sender/receiver 42 and the interface 41.

As a conclusion, according to this invention, sharing user authentication information between usual radio communication network and short range wireless communication system is a source of new value added and secured applications for user of hybrid wireless terminals.

## Claims

1. Method for performing a short-range wireless transaction between an hybrid wireless terminal (11, 30) and a service terminal (12), said hybrid terminal (11) being able to communicate over a first interface (111) with a radio communication network (14) and over a second interface for short-range wireless access (112) with said service terminal (12), said hybrid wireless terminal (11) comprising a user authentication information for authenticating a user in said radio communication network (14), said method being **characterized in that** it comprises the steps of:
- transmitting over said second interface (112) a message to said service terminal (12) comprising said user authentication information;
- authenticating said user at said service terminal (12) by checking said received user authentication information against an authentication database (15);
- enabling said transaction if said user authentication has been successful.

2. Method according to claim 1, **characterized in that** said authentication database (15) is shared by said service terminal (12) and said radio communication network (14).

3. Method according to claim 2, **characterized in that** said authentication database (15) is the Home Location Register (HLR) of said radio communication network (14).

4. Method according to any of the claims 1 to 3, **characterized in that** said interface for short-range access at said hybrid wireless terminal (11) and at said service terminal (12) are compliant with the Bluetooth standard.

5. Method to any of the claims 1 to 4, **characterized in that** said user authentication information is part of a SIM (Subscriber Identity Module) card.

6. Service terminal (40) dedicated to perform a transaction over a short-range wireless interface (41), **characterized in that** it comprises:
- means (42, 43) for receiving a user authentication information from a wireless terminal, said user authentication information being dedicated to authenticate a user in a radio communication network;
- an authentication module (44) for authenticating said user at said service terminal (40) by checking said received user authentication information against an authentication database (45) of said radio communication network, said authentication module enabling said transaction if said authentication has been successful.

7. Service terminal (40) according to claim 6 **characterized in that** it further comprises decryption means for decrypting said received user authentication information according to a predefined decryption algorithm.

8. Wireless terminal (11, 30) comprising a first part (31) for communicating with a radio communication network and a second part (32) for communicating with a service terminal over a short-range wireless interface (321), said first part (31) comprising a user authentication module (314) for authenticating a user in said radio communication network, said wireless terminal (30) being **characterized in that** said second part (32) has access to said user authentication module (314) and transmits at least an user authentication information contained in said user authentication module (314) over said short-range wireless access interface (321) to said service terminal for authenticating said user in said service terminal.

9. Wireless terminal (11, 30) according to claim 8, **characterized in that** it further performs encryption of said user authentication information according to a predefined encryption algorithm before transmitting said user authentication information over said short-range wireless interface.
